# EUROPÄISCHE PATENTSCHRIFT

(11) **EP 3 259 823 B1**
(45) Veröffentlichungstag und Bekanntmachung des Hinweises auf die Patenterteilung: **19.09.2018**
(21) Anmeldenummer: 16704258.9
(22) Anmeldetag: 15.02.2016
(51) Int. Cl.: H02J 7/00, B60L 11/18, H01M 10/42, H01M 2/10

(54) **BATTERIE FÜR EIN KRAFTFAHRZEUG, KRAFTFAHRZEUG UND VERFAHREN ZUM BETREIBEN EINER BATTERIE**
BATTERY FOR A MOTOR VEHICLE, MOTOR VEHICLE, AND METHOD FOR OPERATING A BATTERY
BATTERIE POUR VÉHICULE AUTOMOBILE, VÉHICULE AUTOMOBILE ET PROCÉDÉ PERMETTANT DE FAIRE FONCTIONNER UNE BATTERIE

(30) Priorität: 18.02.2015 DE 102015002152
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE)
(74) Vertreter: Neuhausen, Marc-Alexander
(86) Internationale Anmeldenummer: PCT/EP2016/053164
(87) Internationale Veröffentlichungsnummer: WO 2016/131771

(56) Entgegenhaltungen:
- DE-A1-102014 101 391
- US-A- 5 710 504
- US-A1- 2012 242 144

## Beschreibung

Die Erfindung betrifft eine Batterie für ein Kraftfahrzeug gemäß dem Oberbegriff von Anspruch 1. Weiterhin betrifft die Erfindung ein Kraftfahrzeug mit einer derartigen Batterie. Überdies betrifft die Erfindung ein Verfahren zum Betreiben einer derartigen Batterie.

Lithium-Ionen-Batterien beziehungsweise -Batteriesysteme haben sich aufgrund ihrer hohen Energie- und Leistungsdichte in nahezu allen Bereichen der mobilen Energiespeicher durchgesetzt, egal ob es sich dabei um Pedelecs, Powertools, Hybridantriebe, Elektrofahrzeuge oder sogar um Bahnanwendungen handelt. Gleichzeitig bekommen Lithium-Ionen-Batteriesysteme immer mehr auch an Bedeutung für stationäre Energiespeichersysteme. Charakteristisch für viele Lithium-Ionen-Zellen beziehungsweise deren Zellchemie ist eine flache Ladezustands-Spannungs-Kennlinie. In den Randbereichen unter ca. 10% und über 90% Ladezustand (SoC ...State of Charge) ändert sich die Spannungslage der Batteriezellen jedoch sehr schnell. Über die Zeit driften die Batteriezellen in ihrer Spannungslage möglicherweise auseinander. Dies kann durch unterschiedliche Effekte, wie zum Beispiel verschiedene Selbstentladungsraten, inhomogene Temperaturen im Betrieb oder auch vorzeitige Alterung einiger Zellen in einem Batterieverbund oder auch durch unterschiedliche Chargen (Lieferung aus unterschiedlichen Fertigungslosen) geschehen. Ein Batteriesystem aus einem solchen Zellverbund darf nur solange entladen beziehungsweise geladen werden, bis eine Batteriezelle einen oberen oder unteren Schwellenwert der Spannung erreicht hat. Batteriemanagementsysteme (BMS) haben deshalb auch die Aufgabe, diesem Auseinanderdriften der Zellspannungen in einer Batterie entgegen zu wirken - man spricht in diesem Zusammenhang von "Balancing". Dies wird eingesetzt, um die vollständige nutzbare Kapazität einer Batterie oder eines Batteriesystems zu erhalten.

Ohne "Cell-Balancing" bestimmt in einem Mehrzellen-Batteriesystem die "schwächste" Batteriezelle, über die Kapazität des Gesamtsystems. Die "schwächste" Batteriezelle bestimmt zudem, wie viel Energie aufgenommen beziehungsweise abgegeben werden kann. Dies ist insbesondere für Hochvoltbatterien relevant, bei denen zur Erreichung einer entsprechenden Gesamtspannung eine Vielzahl von Batteriezellen in Reihe geschaltet wird. Unter einer Hochvoltbatterie in einem Fahrzeug wird üblicherweise eine Batterie mit einer Spannung größer als 60 Volt verstanden, je nach Einsatzzweck kann die gewählte Spannung einige hundert Volt betragen. Aktuell werden meist Batteriemanagementsysteme für Batterien so ausgelegt, dass mittels passiver Batteriezellbalancierung dafür Sorge getragen wird, eine Ausgewogenheit hinsichtlich der Batteriezellspannungen beziehungsweise Batteriekapazitäten umzusetzen. Aufgrund der Tatsache, dass in einer Batterie meist sehr viele Batteriezellen in Reihe geschaltet werden, ist es natürlich sehr wichtig, dass bei einer bidirektionalen Strombelastung aller Batteriezellen (Reihenschaltung) - wenn möglich - auch alle Batteriezellen gleich belastet werden.

Eine Möglichkeit besteht in der Bereitstellung eines resistiven Bypasses über jeder einzelnen Batteriezelle, der so gesteuert werden kann, das ein beliebiger Teil des Ladestroms an der Batteriezelle vorbeigeführt wird. Nachteilig ist dabei, dass hierbei ein unverhältnismäßig hoher Anteil an Ladeenergie in Wärme umgesetzt wird, bis alle Batteriezellen vollständig geladen sind, und dass das "Balancing" prinzipbedingt nur im Ladebetrieb funktioniert und währen des Entladens ohne Funktion ist. Auch im Standby einer Batterie erfolgt dann ein Balancing, welches zu einem fortschreitenden Entladen der Batterie führen kann. Von stationären Anwendungen sind aktive Ladungsausgleichsvorrichtungen bekannt, welche auch im Entladebetrieb einen Ausgleich zwischen einzelnen Batteriezellen bereitstellen. Diese auf Basis von Transformatoren realisierten DC/DC-Wandler erfordern einerseits eine aufwendige Verschaltung und führen sowohl zu einem höheren Platzbedarf als auch zu einer höheren Masse, was sich besonders bei mobilen Anwendungen negativ bemerkbar macht.

US5710504 offenbart eine Batterie für ein Fahrzeug, wobei die Batterie eine Mehrzahl von Batteriezellen und ferner eine entsprechende Anordnung von Kondensatoren zum Zellenausgleich aufweist. DE 10 2014 101 391 A1 offenbart eine Batterie für ein Fahrzeug, wobei die Batterie eine Mehrzahl von Batteriezellen aufweist, in der die Batteriezellen mit elektrisch leitfähigen Flächen zur Datenübertragung versehen sind.

Es ist daher Aufgabe der vorliegenden Erfindung, eine Batterie bereitzustellen, welche einen internen Ladungsausgleich bei geringem schaltungstechnischen Aufwand und Platzbedarf erfordert. Es ist weiterhin Aufgabe der Erfindung ein Kraftfahrzeug mit einer derartigen Batterie bereitzustellen sowie ein Verfahren zum Betreiben einer derartigen Batterie.

Diese Aufgabe wird durch eine Batterie mit den Merkmalen des Patentanspruchs 1 sowie durch ein Kraftfahrzeugs mit den Merkmalen des Patentanspruchs 9 und außerdem durch ein Verfahren mit den Merkmalen des Patentanspruchs 10 gelöst. Vorteilhafte Weiterbildungen der vorliegenden Erfindung sind Gegenstand der abhängigen Ansprüche.

Die Erfindung geht von einer Batterie für ein Kraftfahrzeug mit wenigstens zwei benachbart zueinander angeordneten Batteriezellen aus, welche derart weitergebildet wird, dass eine Begrenzungsfläche einer ersten der wenigstens zwei Batteriezellen eine mit einer ersten Ansteuereinrichtung gekoppelte erste elektrisch leitfähige Fläche und eine Begrenzungsfläche einer zweiten der wenigstens zwei Batteriezellen einer mit einer zweiten Ansteuereinrichtung gekoppelte zweite elektrisch leitfähige Fläche aufweist, wobei die zwei elektrisch leitfähigen Flächen elektrisch isoliert voneinander angeordnet sind und ein Kondensatorelement ausbilden. Die Ansteuereinrichtungen sind dazu ausgelegt, elektrische Energie zwischen der ersten der wenigstens zwei Batteriezellen und zweiten der wenigstens zwei Batteriezellen durch Erzeugung eines elektrischen Wechselfeldes in dem Kondensatorelement zu übertragen.

Verfahrensseitig geht die Erfindung von einem Verfahren zum Betreiben einer Batterie für ein Kraftfahrzeug mit wenigstens zwei benachbart zueinander angeordneten Batteriezellen aus, welches weitergebildet wird durch Übertragen elektrischer Energie zwischen einer ersten der wenigstens zwei Batteriezellen und einer zweiten der wenigstens zwei Batteriezellen durch Erzeugen eines elektrischen Wechselfeldes in einem Kondensatorelement, wobei eine Begrenzungsfläche einer ersten der wenigstens zwei Batteriezellen ein mit einer ersten Ansteuereinrichtung gekoppelte erste elektrisch leitfähige Fläche und eine Begrenzungsfläche einer zweiten der wenigstens zwei Batteriezellen eine mit einer zweiten Ansteuereinrichtung gekoppelte zweite elektrisch leitfähige Fläche aufweist. Dabei werden die zwei elektrisch leitfähigen Flächen elektrisch isoliert voneinander angeordnet und bilden das Kondensatorelement aus.

Die Batteriezellen umfassen jeweils ein galvanische Element, welches nachfolgend auch als aktiver Teil der jeweiligen Batteriezelle bezeichnet wird. Dieses ist als Sekundärelement ausgebildet, welches zum Versorgen einer elektrischen Komponente entladen und nach der Entladung wieder aufgeladen werden kann. Hierbei umfasst das galvanische Element in an sich bekannter Weise die Ableiter etwa in Form von Metallfolien, welche mit dem elektrochemisch aktiven Material der Elektroden des galvanischen Elements beschichtet sind. Des Weiteren ist ein Elektrolyt vorgesehen sowie ein die elektrochemisch aktiven Materialien voneinander trennender Separator. In einem solchen galvanischen Element können die Ableiter gestapelt, gefaltet oder gewickelt vorliegen, so dass das galvanische Element auch als Zellstapel oder Zellwickel bezeichnet wird.

Bei dem hier vorgestellten Konzept ist eine besonders vorteilhafte Umsetzung der aktiven Balancierung beziehungsweise Energieübertragung mit Hilfe von Kapazitäten realisierbar. Der große Vorteil bei einer kapazitiven Energieübertragung, welcher auf einen Verschiebungsstrom infolge eines veränderlichen elektrischen Feldes beruht, besteht darin, dass kaum Energie in Form von Wärme verloren geht. Derzeit können schon Leistungen im Bereich von circa 5 bis 10 Watt ohne Probleme übertragen werden. Die nahezu verlustfreie kapazitive Energieübertragung ist somit besonders geeignet für den Einsatz mit einer intelligenten Batteriezelle, welche über eine aktive Ladungsausgleichsfunktion verfügt. Ein "Active balancing" mit individuellem Laden und Endladen von Batteriezellen ist somit dafür geeignet, die maximale Kapazität eines Batteriemoduls, das heißt einer konstruktiv zu einem Verbund zusammengefassten Anordnung von miteinander verschalteten Batteriezellen, über die Lebensdauer hinweg und einen ausgeglichenen Ladezustand (state of charge, SoC) zu erhalten. Das gesamte Batteriesystem kann hierdurch besser ausgenutzt werden, wodurch der Gesamtwirkungsgrad und die effektiv nutzbare Kapazität steigt. Folglich vergrößert sich zum Beispiel auch die Reichweite bei Elektrofahrzeugen oder Hybridfahrzeugen.

In einer bevorzugten Ausführungsform ist die Ansteuereinrichtung der ersten der wenigstens zwei Batteriezellen mit einer übergeordneten Steuerungseinrichtung und/oder mit der Ansteuereinrichtung der zweiten der wenigstens zwei Batteriezellen über eine Kommunikationsverbindung zur Steuerung eines aktiven Ladungsausgleichs zwischen der ersten der wenigstens zwei Batteriezellen und der zweiten der wenigstens zwei Batteriezellen gekoppelt. Bevorzugt kann die Kommunikationsverbindung hierbei drahtlos vorliegen, insbesondere über eine lokale Funkverbindung wie beispielsweise ZigBee, Bluetooth, WLAN und dergleichen. Bevorzugt können die Ansteuereinrichtungen dazu ausgelegt sein, Zustandsinformationen über die jeweilige Batteriezelle an die übergeordnete Steuerungseinrichtung zu übermitteln, welche dann aus der Gesamtheit der vorliegenden Daten ermittelt, zwischen welchen Batteriezellen zweckmäßigerweise ein Energieaustausch zu erfolgen hat, und dadurch den aktiven Ladungsaustausch zwischen den einzelnen Batteriezellen zu steuern. Dadurch ergibt sich der Vorteil, dass die einzelnen Ansteuereinrichtungen koordiniert betrieben werden können, wodurch insbesondere unnötige Energieübertragungen zwischen Batteriezellen vermeidbar sind.

In einer vorteilhaften Weiterbildung ist die übergeordnete Steuerungseinrichtung dazu ausgelegt, einen Sollwert für eine zu entnehmende Energie aus der ersten der wenigstens zwei Batteriezellen vorzugeben und an die Ansteuereinrichtung der ersten der wenigstens zwei Batteriezellen über die Kommunikationsverbindung bereitzustellen. Die Ansteuereinrichtung ist hierbei dazu ausgelegt, in Abhängigkeit von dem bereitgestellten Sollwert das elektrische Wechselfeld in dem Kondensatorelement zu erzeugen. So kann beispielsweise durch die übergeordnete Steuerungseinrichtung vorgegeben werden, dass aus der ersten Batteriezelle elektrische Energie in Form von elektrochemisch gespeicherter Energie entnommen wird. Weiterhin kann vorgegeben werden, dass diese über die zugehörige Ansteuereinrichtung über ein oder mehrere Kondensatorelemente, welche jeweils zwischen zwei benachbarten Batteriezellen ausgebildet sind, übertragen wird, ohne dass beispielsweise hierbei Energie aus dem Übertragungsweg ausgekoppelt wird. Schließlich kann vorgegeben werden, die Energie in einer weiteren Batteriezelle der Kette, über die dortige Ansteuereinrichtung in dieser Batteriezelle zurück zu koppeln und dort als elektrochemische Energie einzuspeichern. Die kapazitive Energieübertragung gemäß dem vorgestellten Konzept ermöglicht somit das komfortable Weiterleiten der Energie von Batteriezelle zu Batteriezelle, wobei es nicht erforderlich ist, die Energie zunächst in die Zelle selbst einzulagern und danach wieder zu entnehmen. Somit ergibt sich insbesondere auch die Möglichkeit, Batteriezellen welche weder eine Ladung noch eine Endladung benötigen, während des Vorgangs des Balancings nicht zusätzlich zu belasten.

In einer bevorzugten Ausführungsform ist die erste elektrisch leitfähige Fläche und die zweite elektrisch leitfähige Fläche jeweils durch ein Gehäuse der jeweiligen der wenigstens zwei Batteriezellen gebildet. In diesem Fall ist das Gehäuse isoliert vom aktiven Teil der jeweiligen Batteriezelle angeordnet, das heißt es besteht keine direkte elektrische Verbindung zu einer ihrer Elektroden oder einem Elektrolyten, einem Anschlusselement beispielsweise in Form eines Plus- oder eines Minuspolanschlusses oder einem sonstigen in einer direkten elektrischen Verbindung mit einem galvanischen Element der Batteriezelle stehenden Element.

Hierbei ergibt sich insbesondere bei sogenannten prismatischen Zellen, bei welchen die Elektroden aus flachen Stapeln bestehen und welche somit eine zumeist rechteckförmige Grundfläche aufweisen, über die beiden einander benachbarten Seitenflächen zweier Gehäuse quasi ein idealer Plattenkondensator, dessen Dielektrikum durch eine zusätzlich einzufügende dünne Isolierfolie bereitgestellt werden kann, welche zwischen die beiden Gehäuse der Batteriezellen eingefügt wird. Eine solche Folie kann auch bereits auf das Gehäuse der Batteriezelle aufgebracht werden, bevor diese in der Batterie verbaut wird. Dadurch ergibt sich zwischen den einzelnen Gehäusen der Batteriezellen eine doppelte Isolierung, welche den Vorteil aufweist, dass auch im Falle einer Beschädigung oder eines Materialfehlers die Wahrscheinlichkeit eines vollständigen Versagens der Isolierung deutlich reduziert wird. Alternativ kann eine Isolierung der einzelnen Batteriezellen auch in Form eines aufzubringenden Lacks oder einer sonstigen Kunststoffbeschichtung bestehen.

Bevorzugt umfasst die Batterie wenigstens eine dritte Batteriezelle, wobei die erste Ansteuereinrichtung dazu ausgelegt ist, in der ersten Batteriezelle elektrochemisch gespeicherte Energie zu entnehmen und diese durch Erzeugung des elektrischen Wechselfeldes in dem Kondensatorelement zu übertragen, die elektrische Energie über die zweite der Batteriezellen hinweg durchzuleiten, ohne die Energie elektrochemisch in der zweiten Batteriezelle zwischenzuspeichern, und wobei eine dritte Ansteuereinrichtung dazu ausgelegt ist, die durchgeleitete elektrische Energie in die dritte der Batteriezellen einzuspeisen. Somit besteht durch die verkettete Plattenkondensatoranordnung die Möglichkeit, die zu verteilende Energiemenge mittels der Ansteuereinrichtungen direkt, das heißt ohne ein Zwischenspeichern in elektrochemischer Form durch ein Laden und anschließendes Entladen der in dem Übertragungsweg befindlichen Batteriezelle, an die nächste Batteriezelle dynamisch und zielgerichtet weiter zu geben. Hierdurch lässt sich die Lebensdauer der Batteriezellen signifikant erhöhen und die Performance des Gesamtbatteriesystems kann gesteigert werden. Energetische Verluste, die bei der Überführung von elektrischer Energie in elektrochemisch in dem galvanischen Element gespeicherte Energie und zurück unvermeidlich sind, können so auf ein Mindestmass reduziert werden.

In einer weiteren bevorzugten Ausführungsform umfasst die Batterie wenigstens zwei Batteriemodule, wobei die wenigstens zwei Batteriemodule jeweils eine mit einer Modul-Ansteuereinrichtung gekoppelte elektrisch leitfähige Modulfläche aufweisen, welche elektrisch isoliert voneinander angeordnet sind und ein Modul-Kondensatorelement ausbilden, wobei die Modul-Ansteuereinrichtungen des jeweiligen Batteriemoduls dazu ausgelegt sind, elektrische Energie zwischen den wenigstens zwei Batteriemodulen durch Erzeugung eines elektrischen Wechselfeldes in dem Modul-Kondensatorelement zu übertragen. Hierdurch ergibt sich der Vorteil, dass bei größeren Batterieanordnungen mit einer höheren Anzahl von Batteriezellen, welche insbesondere für einen Hochvolteinsatz notwendig sind, eine zu übertragende Energie für einen Ladungsausgleich zwischen einzelnen Batteriezellen nicht zwangsweise über jede einzelne Batteriezelle entsprechend ihrer Anordnung zueinander übertragen werden muss, sondern dass eine Energieübertragung von Batteriemodul zu Batteriemodul ermöglicht und somit ein kürzerer Übertragungsweg erreicht wird. Somit kann einerseits direkt Energie von einem Modul zum nächsten oder gemäß dem bereits für Einzelzellen dargestellten Übertragungsprinzip zu einem weiter entfernten Batteriemodul übertragen werden, und gleichzeitig kann auch innerhalb eines Moduls ein Energieaustausch zwischen einzelnen Batteriezellen erfolgen.

In einer besonders vorteilhaften Weiterbildung sind die Modul-Ansteuereinrichtungen mit der Gesamtheit der jeweils ein Batteriemodul bildenden Batteriezellen gekoppelt. Hierdurch wird nur eine zusätzliche Modul-Ansteuereinrichtung pro Modul benötigt, welche dann bevorzugt mit der gesamten innerhalb des Batteriemoduls zur Verfügung stehenden Batteriespannung gespeist wird. Somit erfolgt in diesem Fall ein Energieaustausch zwischen einzelnen Batteriemodulen als gemeinsamer Block der jeweils darin befindlichen Batteriezellen, ein Energieaustausch zwischen einzelnen Batteriezellen erfolgt in diesem Fall nur innerhalb eines Batteriemoduls.

Alternativ dazu kann eine parallele Ankopplung jeder einzelnen Batteriezelle an einer Modulfläche vorgesehen sein. Hierdurch ergibt sich der Vorteil, dass jede einzelne Batteriezelle direkt über einen Koppelpfad der Batteriemodule untereinander Energie mit einer anderen Batteriezelle eines anderen Batteriemoduls sozusagen "auf der Überholspur" austauschen kann. Damit einzelne Batteriezellen auch gleichzeitig auf die Modulfläche einkoppeln können, kann eine synchronisierte Einspeisemöglichkeit der einzelnen Ansteuereinrichtungen vorgesehen sein.

In einer weiteren bevorzugten Ausführungsform ist die Ansteuereinrichtung durch einen einzigen integrierten Schaltkreis sowie passive Bauelemente ausgebildet. Indem beispielsweise die gesamte für ein "Active-Balancing" benötigte Funktionalität in einem "Smartcell-Halbleiterchip" integriert ist, kann ein besonders kostengünstiger und platzsparender Aufbau erzielt werden. In diesem Fall werden dann bevorzugt nur noch weitere passive Bauelemente, worunter hier insbesondere Transformatoren, Induktivitäten, Kondensatoren oder Widerstände verstanden werden, vorgesehen, beispielsweise zum Aufbau eines Resonanzkreises mit einer Induktivität und einem Kondensator. Bevorzugt kann auch ein Transformator zum Einsatz kommen, welcher eine Anpassung der Spannung erlaubt. Mit höherer Spannung an dem Kondensatorelement (Koppelkapazität) steigt auch die kapazitiv übertragbare Energie.

Das erfindungsgemäße Kraftfahrzeug umfasst zumindest eine erfindungsgemäße Batterie. Das Kraftfahrzeug kann beispielsweise als Personenkraftwagen, insbesondere als ein Elektrofahrzeug oder Hybridfahrzeug ausgebildet sein. Des Weiteren kann es sich bei dem Kraftfahrzeug auch um ein elektrisch betriebenes Motorrad oder um ein elektrisch betriebenes Fahrrad handeln. Insbesondere kann die übergeordnete Steuerungseinrichtung mit einem Bussystem, etwa einem CAN-Bus, des Kraftfahrzeugs gekoppelt sein, wodurch sich Informationen über den Batteriezustand komfortabel zur Verfügung stellen lassen.

Es ist des Weiteren möglich, die Batterie in einem stationären Energiespeichersystem vorzusehen. Darüber hinaus kann es vorgesehen sein, dass die Batterie, welche in einem Kraftfahrzeug bereitgestellt war, als sogenannte Second Life Batterie weiterverwendet wird, bei welcher also die Batterie einer anders gearteten Nutzung zugeführt wird. Insbesondere bei Second Life Anwendungen können nämlich die Anforderungen etwa an die Leistungsfähigkeit der Batteriezellen geringer sein als bei Verwendung der Batteriezellen für die Batterie des Kraftfahrzeugs.

Die für die erfindungsgemäße Batterie beschriebenen Vorteile und bevorzugten Ausführungsformen gelten auch für das erfindungsgemäße Kraftfahrzeug.

Die für die erfindungsgemäße Vorrichtung und das erfindungsgemäße Kraftfahrzeug beschriebenen Vorteile und Merkmale sowie Ausführungsformen gelten gleichermaßen für entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in einer vereinfachten schematisch-perspektivischen Ansicht einen Ausschnitt einer ersten Variante einer Batterie mit Batteriezellen, bei welchen kapazitive Energieübertragung möglich ist;
- Fig. 2: eine schematische Schaltbildansicht der Anordnung gemäß Fig. 1;
- Fig. 3: eine vereinfachte schematische Ansicht der kapazitiven Energieübertragung zwischen Batteriezellen;

- Fig. 4: eine vereinfachte schematische Darstellung des Kopplungsprinzips der kapazitiven Energieübertragung; und
- Fig. 5: eine vereinfachte schematische Darstellung der Energieübertragung auf Modulebene zwischen einzelnen Zellen sowie der Energieübertragung auf Batteriesystemebene zwischen einzelnen Batteriemodulen.

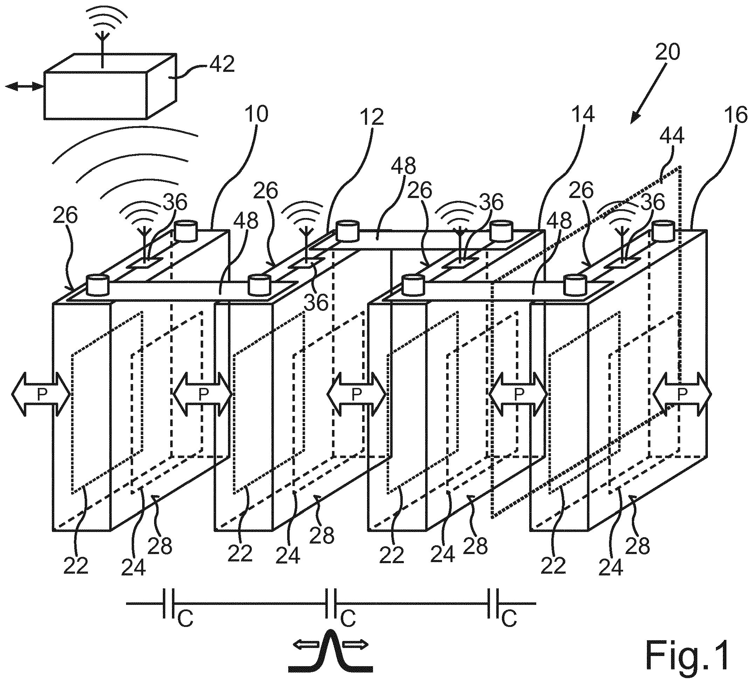

Fig. 1 zeigt in einer schematisch-perspektivischen Ansicht einen Ausschnitt aus einer Batterie 20 mit benachbart zueinander angeordneten Batteriezellen, von denen beispielhaft lediglich die Batteriezellen 10, 12, 14, 16 dargestellt sind. In der vorliegenden Ausgestaltung ist die Batterie 20 ein Akkumulator, der in einem nicht dargestellten Kraftfahrzeug Bestandteil von dessen elektrischer Anlage ist und zur elektrischen Energieversorgung eines elektrischen Antriebs des Kraftfahrzeugs dient.

Die Batteriezellen 10, 12, 14, 16 sind vorliegend in Reihenschaltung geschaltet und entsprechend mit Stromschienen 48 elektrisch leitend verbunden. Jede der Batteriezellen 10, 12, 14, 16 ist vorliegend als Lithium-Ionen-Zelle ausgebildet und weist eine im Wesentlichen quaderförmige äußere Struktur auf. Die quaderförmige Struktur stellt gegenüberliegende seitliche Begrenzungsflächen 26, 28 bereit. Die Begrenzungsflächen 26, 28 sind aus einem elektrisch isolierenden Werkstoff gebildet, vorliegend aus einem Kunststoff. Auf den Begrenzungsflächen 26, 28 sind jeweils eine erste und eine zweite elektrisch leitfähige Fläche 22, 24 mittels einer Klebeverbindung aufgebracht. Die elektrisch leitfähigen Flächen 22, 24 sind elektrisch isoliert voneinander angeordnet, und zwar nicht nur bezogen auf die jeweilige Batteriezelle 10, 12, 14, 16, sondern auch bezogen auf die jeweils gegenüberliegende elektrisch leitfähige Fläche 22, 24 der jeweiligen benachbarten Batteriezellen 10, 12, 14, 16. Vorliegend ist vorgesehen, dass zwischen den gegenüberliegenden elektrisch leitfähigen Flächen 22, 24 benachbarter Batteriezellen 10, 12, 14, 16 jeweils eine elektrisch isolierende Folie 44 aus einem Isolierwerkstoff, etwa aus Polyamid, angeordnet ist. In der vorliegenden Ausgestaltung ist vorgesehen, dass die Begrenzungsflächen 26, 28 mit den jeweiligen elektrisch leitfähigen Flächen 22, 24 benachbarter Batteriezellen 10, 12, 14, 16 unmittelbar über die jeweilige Isolierfolie 44 aneinander angrenzen.

Da sich zwischen den einzelnen Batteriezellen 10, 12, 14, 16 ohnehin elektrische Isolierungen beispielsweise in Form der Isolierfolie 44 befinden, kann auf diesem Weg jeweils ein Plattenkondensator wie in Fig. 1 ersichtlich aufgebaut werden. Die jeweils zu einer Batteriezelle 10, 12, 14, 16 gehörenden elektrisch leitfähigen Flächen 22 und 24 können hierbei nicht nur elektrisch isoliert voneinander angesteuert werden, sondern können auch gemeinsam auf dem gleichen Potential liegend angesteuert werden. Insbesondere kann auch vorgesehen sein, dass die elektrisch leitfähigen Flächen 22 und 24 Teil eines elektrisch leitfähigen Gehäuses der jeweiligen Batteriezelle 10, 12, 14, 16 sind, welches keine galvanische Verbindung mit dem aktiven Teil, also dem galvanischen Element, der Batteriezelle 10, 12, 14, 16, und insbesondere mit den beiden elektrischen Anschlüssen der Batteriezelle aufweist.

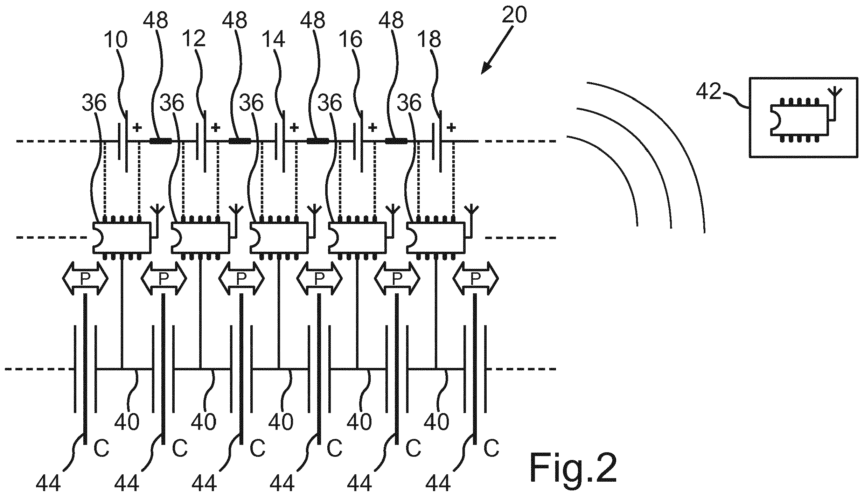

Wie in Fig. 2 dargestellt, können hierbei die einzelnen Gehäuse 40 der Batteriezellen 10, 12, 14, 16 sowie einer weiteren dargestellten Batteriezelle 18, die wie die anderen Batteriezellen 10, 12, 14, 16 ausgebildet ist, jeweils mit einem benachbarten Gehäuse 40 einen Plattenkondensator C aufbauen. Energie kann folglich durch die verkettete Anordnung der Plattenkondensatoren C von einer Batteriezelle 10, 12, 14, 16, 18 auf die benachbarten Batteriezellen 10, 12, 14, 16, 18 (links oder rechts) und umgekehrt übertragen werden.

Bei dem Energietransfer von Batteriezelle 10, 12, 14, 16, 18 zu Batteriezelle 10, 12, 14, 16, 18, welcher durch den Doppelpfeil P symbolisch dargestellt ist, ist es nicht zwingend erforderlich, die zu transferierende Energiemenge in der jeweils im Übertragungsweg liegenden Batteriezelle 10, 12, 14, 16, 18 zuerst einzuspeichern und in der Folge wieder zu entnehmen und dadurch möglicherweise die Batteriezelle 10, 12, 14, 16, 18 außerhalb der von der Batteriezellchemie gesetzten Grenzen zu betreiben. So ist es beispielsweise möglich, Energie von der Batteriezelle 12 direkt über die verkettete Anordnung der jeweiligen Gehäuse 40 der Batteriezellen 14 und 16 auf die Batteriezelle 18 zu übertragen, wo durch eine zugehörige Ansteuereinrichtung 36 die Energieentnahme erfolgen kann. Durch die verkettete Plattenkondensator-Anordnung besteht die Möglichkeit, die jeweils zu übertragenden Energiemengen entsprechend einem "Active-Balancing"-Konzept direkt ohne Entnahme und anschließende Wiedereinspeisung in den kapazitiven Koppelpfad an die nächste Batteriezelle 10, 12, 14, 16, 18 dynamisch und zielgerichtet weiter zu geben.

Wie bereits zuvor erwähnt, können die verketteten Plattenkondensatoren C besonders bevorzugt mittels der Gehäuse 40 selbst als "Kondensatorplatte" realisiert werden. Die Gehäuse 40 bestehen meist aus Aluminium und liegen üblicherweise gegenüber dem aktiven Teil der Batteriezelle 10, 12, 14, 16, 18 in isolierter Form vor. Das Gehäuse 40 ist hierbei lediglich mit der Ansteuereinrichtung 36 verbunden und diese ist mit dem aktiven Teil der Batteriezelle selbst elektrisch verbunden (Plus- und Minusanschluss). Für den Fall, dass das Gehäuse 40 für einen isolierten Aufbau nicht geeignet ist, besteht weiterhin die Möglichkeit, Kondensatorelemente C als Plattenkondensatoren zwischen den Batteriezellen in Form der elektrisch leitfähigen Flächen 22 und 24 zu realisieren.

Eine der Batteriezellen 10, 12 14, 16, 18 kann jeweils mit einer übergeordnete Steuerungseinrichtung 42 zum Beispiel drahtlos kommunizieren. Die Steuerungseinrichtung 42 kann über alle Batteriezellen 10, 12 14, 16, 18 den erforderlichen Energiebedarf ermitteln und entsprechend einem vorgebbaren intelligenten Algorithmus nach dem aktiven Balancing-Prinzip aufteilen.

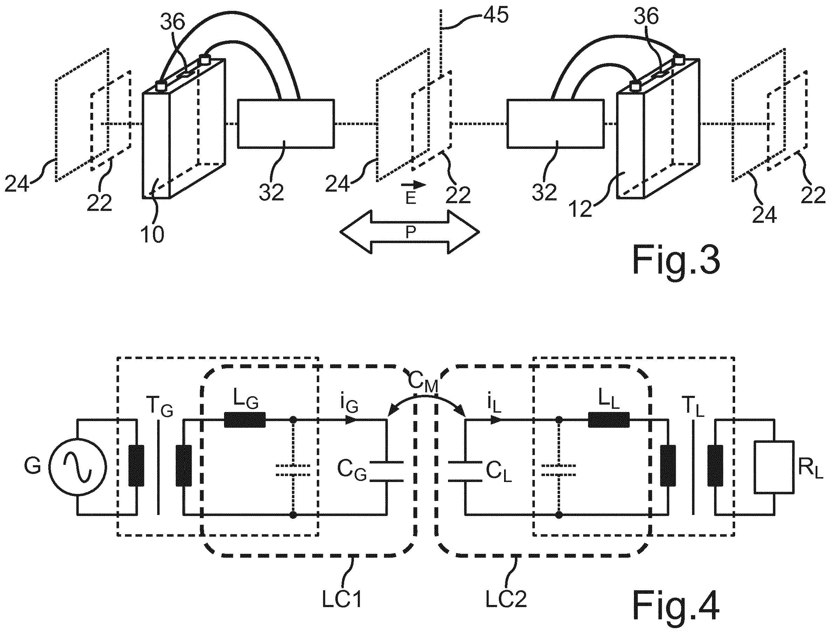

Fig. 3 zeigt eine vereinfachte Darstellung der kapazitiven Energieübertragung zwischen zwei Batteriezellen 10, 12. Dabei weist sowohl die Batteriezelle 10 als auch die Batteriezelle 12 jeweils die Steuerungs- und Überwachungsvorrichtung 36 auf, welche mit einer Sender- und Empfängereinheit 32 (Transceiver Tx/Rx) gekoppelt ist. Die Sender- und Empfängereinheit 32 kann hierbei auch Bestandteil der Steuerungs- und Überwachungseinrichtung 36 sein. Die Sender- und Empfängereinheit 32 ist hierbei elektrisch mit den beiden Anschlüssen, das heißt Plus- und Minuspol, der jeweiligen Batteriezelle 10 beziehungsweise 12 gekoppelt. Weiterhin sind die Sender- und Empfängereinheiten 32 jeweils mit der zu der jeweiligen Batteriezellen 10, 12 gehörenden ersten elektrische leitfähigen Fläche 22 und der zweiten elektrisch leitfähigen Fläche 24 jeweils elektrisch gekoppelt. An einer galvanischen Trennungsfläche 45 ergibt sich somit ein aus der ersten leitfähigen Fläche 22, welche zu der Batteriezelle 12 gehört und der zweiten elektrisch leitfähigen Fläche 24, welche zu der Batteriezelle 10 gehört, ein Plattenkondensator C. Über diesen Plattenkondensator C kann mittels eines veränderlichen elektrischen Feldes E (*̅E̅*̅) eine Energieübertragung über einen daraus resultierenden elektrischen Verschiebestrom erfolgen, dargestellt durch einen die kapazitive Energieübertragung symbolisierenden Doppelpfeil P. Da die kapazitive Energieübertragung auf der Verschiebung von Ladungsträgern im elektrischen Feld beruht, entstehen damit quasi keine ohmschen Verluste. Somit lassen sich sehr hohe Wirkungsgrade erzielen, insbesondere wenn nur kleine Energiemengen übertragen werden.

Die beiden elektrisch leitfähigen Flächen 22 und 24 können hierbei als Kupferfolien ausgebildet sein, sie können extrem dünn ausgestaltet sein, was sich vorteilhaft auf die Größe der Batteriezellen 10, 12 14, 16, 18 auswirkt, die für die Schaffung des zusätzlichen Übertragungswegs nicht durch voluminöse Komponenten ergänzt werden müssen. Bevorzugt kann es sich hierbei auch um metallisierte Folien handeln, welche beispielsweise durch Bedampfen mit Metall oder durch elektrochemische Abscheidung von Metall mit einer leitfähigen Oberfläche ausgestattet wurden. Die Form der elektrisch leitfähigen Flächen 22, 24 kann dabei beliebig gestaltet sein. Insbesondere ist es auch nicht notwendig, dass eine erste leitfähige Fläche 22, welche zu einer Batteriezelle 12 gehört und eine zweite elektrisch leitfähige Fläche 24, welche zu der Batteriezelle 10 gehört, sich vollständig überlappen.

Die derzeit übertragbaren Leistungen liegen bei dieser Art der Energieübertragung derzeit bei circa 5 bis 10 Watt. Bevorzugte Frequenzen für die kapazitive Energieübertragung liegen im Bereich zwischen 100 kHz bis 2 MHz. Zur Steigerung der übertragbaren Leistung wird hierbei die Spannung möglichst hoch gewählt, wobei die mögliche Höhe der Spannung durch die Durchschlagsfestigkeit der Isolierfolie 44 aufgrund physikalischer Gegebenheiten limitiert ist.

Das Kopplungsprinzip der kapazitiven Energieübertragung ist nachstehend in Fig. 4 erläutert.

Ein Generator G speist in eine Primärwicklung eines Transformators T_{G} ein. An einem sekundärseitigen Ausgang des Transformators T_{G} ist eine Resonanzinduktivität L_{G} elektrisch gekoppelt, welche mit einer Kapazität C_{G} zu einem elektrischen Serienresonanzkreis LC1 gekoppelt ist. Der Strom durch die Kapazität C_{G} ist mit i_{G} bezeichnet. Ein zweiter Anschlusspunkt der Sekundärseite des Transformators T_{G} ist hierbei elektrisch mit dem Kondensator C_{G} gekoppelt. Die Resonanzfrequenz wird außerdem durch eine gestrichelt angedeutete interne Kapazität beeinflusst, die Teil einer gestrichelt umrandeten Transmitterschaltung ist, welcher sich zwischen dem Generator G und der Kapazität C_{G} befindet. Entsprechend spiegelbildlich ist eine Schaltung auf einer Lastseite aufgebaut, welche eine Kapazität C_{L} aufweist, welche von einem Strom iL durchflossen wird. Die Kapazität C_{L} bildet zusammen mit einer Induktivität L_{L} einen Serienresonanzkreis LC2, welcher an die Sekundärseite eines Transformators T_{L} elektrisch gekoppelt ist. Die Resonanzfrequenz wird wie auch auf der Generatorseite durch eine gestrichelt angedeutete interne Kapazität beeinflusst, die Teil einer gestrichelt umrandeten Receiverschaltung ist, welcher sich zwischen der Kapazität C_{L} und einer mit der Primärseite des Transformators T_{L} elektrisch gekoppelten Last R_{L} befindet. Zwischen den beiden Mittelpunkten der zwei Resonanzkreise LC1 und LC2 ergibt sich eine Koppelkapazität C_{M}. Mit Mittelpunkt eines Resonanzkreises wird hierbei der Verbindungspunkt der Resonanzinduktivität und der Resonanzkapazität, beispielsweise L_{G} und C_{G} verstanden. Der jeweils andere Verbindungspunkt dieser beiden Bauelemente in dem genannten Beispiel ist jeweils mit einem Anschluss der Sekundärseite des Transformators T_{G} verbunden.

Beispielsweise ist die obere Elektrode der Kapazität C_{G} durch die mit der einen Sender- und Empfängereinheit 32 gekoppelte elektrisch leitfähige Fläche 24 (linke Seite Fig. 3) und die obere Elektrode der Kapazität C_{L} durch die mit der anderen Sender- und Empfängereinheit 32 gekoppelte elektrisch leitfähige Fläche 22 (rechte Seite Fig. 3) gebildet. In diesem Fall kann die untere Elektrode der Kapazität C_{G} durch das Gehäuse der Batteriezelle 10 gebildet sein, welches eine elektrische Verbindung mit dem aktiven Teil der Batteriezelle 10 aufweist. Ebenso kann die untere Elektrode der Kapazität C_{L} durch das Gehäuse der Batteriezelle 12 gebildet sein, welches eine elektrische Verbindung mit dem aktiven Teil der Batteriezelle 12 aufweist. Die beiden Gehäuse stehen dann über die (in Fig. 3 nicht dargestellte) Stromschiene 48 in einem definierten Potentialbezug zueinander, welcher für ein hochfrequentes Signal eine niederimpedante Verbindung darstellt. Für den Fall, dass anstelle separater elektrisch leitfähiger Flächen 22 und 24 die jeweiligen Gehäuse 40 der Batteriezellen 10 und 12 eingesetzt werden, die in dieser Ausgestaltung dann isoliert von dem aktiven Teil der jeweiligen Batteriezelle angeordnet sind, ist die untere Elektrode der Kapazität C_{G} durch den aktiven Teil der Batteriezelle 10 und die untere Elektrode der Kapazität C_{L} durch den aktiven Teil der Batteriezelle 12 gegeben.

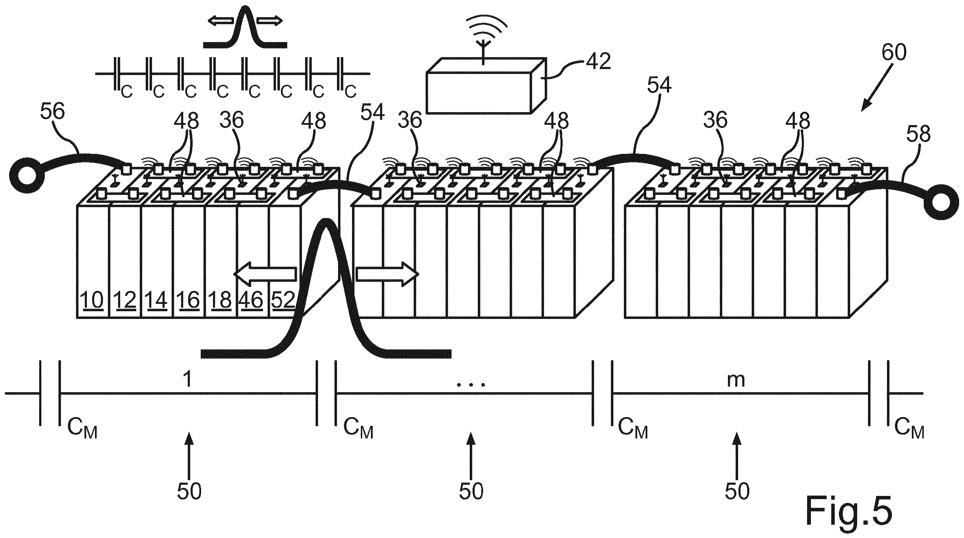

Fig. 5 zeigt einen beispielhaften Aufbau eines Batteriesystems 60 mit noch zwei weiteren Batteriezellen 46, 52, welches mehrere Batteriemodule 50 aufweist, die ihrerseits jeweils mehrere Batteriezellen 10, 12 14, 16, 18, 46, 52 aufweisen. Die Batteriezellen 10, 12 14, 16, 18, 46, 52 sind innerhalb eines Batteriemoduls 50 durch Stromschienen 48 elektrisch leitend verbunden. Es kann sich hierbei um eine elektrische Serienschaltung, um eine elektrische Parallelschaltung oder auch um eine gemischte Serien-Parallelschaltung handeln. Wie bereits zuvor dargestellt, bilden die elektrisch leitfähigen Flächen 22 und 24, beziehungsweise die Gehäuse der jeweiligen Batteriezelle mit dem entsprechenden Gegenstück der benachbart angeordneten Batteriezelle 52 eine Kapazität C. Innerhalb eines Moduls sind die einzelnen Batteriezellen 52 beispielhaft von 1, 2, 3 bis n durchnummeriert. Durch die verkettete Anordnung der Plattenkondensatoren C von einer Batteriezelle 10, 12 14, 16, 18, 46, 52 auf eine benachbarte Batteriezelle 10, 12 14, 16, 18, 46, 52 kann Energie von links nach rechts (10-12-14-16-18-46-52) oder von rechts nach links (52-46-18-16-14-12) übertragen werden. Somit kann durch das ganze Batteriemodul 50 hinweg die Energie übertragen werden, was in der Fig. 5 durch das Symbol einer Welle angedeutet ist. Somit kann einerseits eine Energieübertragung direkt an eine benachbarte Batteriezelle 10, 12 14, 16, 18, 46, 52 erfolgen, beispielsweise von Batteriezelle 12 auf die Batteriezelle 14, oder beispielsweise in umgekehrter Richtung von der Batteriezelle 46 auf die Batteriezelle 18. Es ist jedoch auch möglich, Energie von der Batteriezelle 12 auf zum Beispiel die Batteriezelle 52 zu übertragen, ohne dass von den dazwischen liegenden Batteriezellen 14, 16, 18, 46 Energie aus dem kapazitiv angeregten Koppelpfad entnommen wird.

Weiterhin können einzelne Batteriezellen 10, 12 14, 16, 18, 46, 52 zu einem Batteriemodul 50 gruppiert sein. Das Batteriemodul 50 kann insbesondere eine gemeinsame Elektrode in Form einer oder mehrere elektrisch leitfähiger Flächen aufweisen, welche mit dem benachbarten Batteriemodul 50 eine Koppelkapazität C_{M} bilden. Die Batteriemodule 50 sind hierbei über Modulverbindungselemente 54 miteinander elektrisch verschaltet. Wie bereits für die Zellebene vorgeschlagen, kann auch auf Modulebene eine Serienschaltung, eine Parallelschaltung oder eine kombinierte Serien-Parallelschaltung der einzelnen Module 50 vorliegen. Die Batterie 60 weist außerdem einen Batterie-Plusanschluss 56 sowie einen Batterie-Minusanschluss 58 auf. Darüber hinaus besteht die Möglichkeit, selbst auf Batterieebene, von Batteriemodul 50 zu Batteriemodul 50 einen kapazitiven Energietransfer umzusetzen. Zwischen den Batteriemodulen 50 ist hierfür eine entsprechende Kopplungsstelle vorgesehen. Im einfachsten Fall können diese Kopplungsstellen als einfache Plattenkondensatoren realisiert und in die Batterie 60 integriert werden. Das Steuerungseinrichtung 42 übernimmt übergeordnet den definierten Energieaustausch.

Möglich ist auch ein gleichzeitig koordinierter kapazitiver Energieaustausch zwischen mehreren Batteriemodulen 50 (Multi-Energietransfer), ohne dass diese sich dabei gegenseitig in Folge von Interferenzen behindern. So kann beispielsweise auch vorgesehen sein, dass die erste elektrisch leitfähige Fläche 22 und die zweite elektrisch leitfähige Fläche 24 elektrisch unabhängig voneinander angeordnet sind und separat angesteuert werden können. Auf diese Weise ist jeweils in einem ersten Schritt lediglich eine Energieübertragung auf eine direkt benachbart in einer vorgegebenen Richtung liegende Batteriezelle 10, 12 14, 16, 18, 46, 52 gegeben. Dadurch kann ein gleichzeitiger Energieaustausch an vielen Stellen der Batterie 60 gleichzeitig erfolgen, ohne dass beispielsweise eine Synchronisation der Einspeisephasen und - frequenzen erfolgen muss. Dabei kann auch vorgesehen sein, zwischen der ersten elektrisch leitfähigen Fläche 22 und der zweiten elektrisch leitfähigen Fläche 24 eine temporäre elektrische Kopplung bereitzustellen, wenn die Energie gerade nur über die Zelle hinweg geleitet werden soll.

Die Energieübertragung von dem Batteriemodul 50 auf das benachbarte Batteriemodul 50 in einer Kette von m Batteriemodulen 50 ist in der Darstellung gemäß Fig. 5 für m = 3 dargestellt. Die symbolisch als Welle dargestellte Energieübertragung ist hier zwischen dem ersten Batteriemodul 50 und dem mittleren Batteriemodul 50 eingezeichnet.

Hierbei kann vorgesehen sein, dass jede der Batteriezellen 10, 12 14, 16, 18, 46, 52 innerhalb eines Batteriemoduls 50 auf die zugehörige elektrisch leitfähige Fläche des Batteriemoduls 50 kapazitiv einkoppeln kann. Alternativ oder zusätzlich kann es auch vorgesehen sein, dass alle Batteriezellen 52 innerhalb des Batteriemoduls 50 in der gegebenen elektrischen Verschaltung gemeinsam über eine einzige Sender- und Empfängereinheit 32 auf die zugehörige elektrisch leitfähige Fläche, welche für die Bildung der Koppelkapazität C_{M} für ein benachbart angeordnetes Batteriemodul 50 benötigt wird, kapazitiv einkoppeln. Die Batteriemodule 50 können auch in mehreren Stockwerken übereinander angeordnet sein. In diesem Fall sind entsprechende Kopplungseinheiten von unten nach oben zur Bereitstellung eines kapazitiven Koppelpfades vorzusehen.

Auch wenn die kapazitive Energieübertragung anhand von Batterien im Zusammenhang mit Kraftfahrzeugen erläutert worden ist, ist es für den Fachmann klar, dass die Anwendung derselben nicht auf diese Anwendungen beschränkt ist. Die kapazitive Energieübertragung kann natürlich auch bei stationären elektrischen Anlagen, insbesondere auch im Bereich von elektrischen Schaltanlagen, zum Einsatz kommen. Auch hier kommt der Vorteil besonders deutlich hervor, vorzugsweise beim Einsatz in unterbrechungsfreien Energieversorgungen, insbesondere für sicherheitsrelevante Funktionen. Dies ist besonders bei elektrischen Anlagen in der Signaltechnik beziehungsweise der Kommunikationstechnik von großem Vorteil.

Somit wurde vorstehend gezeigt, wie eine Energieübertragung mittels kapazitiver Kopplungseinheiten insbesondere durch Nutzung von Plattenkondensatoren oder von dem Gehäuse 40 selbst zur kapazitiven Energieübertragung gestaltet sein kann.

## Patentansprüche

1. Batterie (20, 60) für ein Kraftfahrzeug mit wenigstens zwei benachbart zueinander angeordneten Batteriezellen (10, 12, 14, 16, 18, 46, 52), **dadurch gekennzeichnet,**
**dass** eine Begrenzungsfläche (26) einer ersten der wenigstens zwei Batteriezellen (10, 12, 14, 16, 18, 46, 52) eine mit einer ersten Ansteuereinrichtung (36) gekoppelte erste elektrisch leitfähige Fläche (22) und eine Begrenzungsfläche (28) einer zweiten der wenigstens zwei Batteriezellen (10, 12, 14, 16, 18, 46, 52) eine mit einer zweiten Ansteuereinrichtung (36) gekoppelte zweite elektrisch leitfähige Fläche (24) aufweist, wobei die zwei elektrisch leitfähigen Flächen (22, 24) elektrisch isoliert voneinander angeordnet sind und ein Kondensatorelement (C) ausbilden, wobei die Ansteuereinrichtungen (36) dazu ausgelegt sind, elektrische Energie zwischen der ersten der wenigstens zwei Batteriezellen (10, 12, 14, 16, 18, 46, 52) und zweiten der wenigstens zwei Batteriezellen (10, 12, 14, 16, 18, 46, 52) durch Erzeugung eines elektrischen Wechselfeldes in dem Kondensatorelement (C) zu übertragen.

2. Batterie (20, 60) nach Anspruch 1,
**dadurch gekennzeichnet,**
**dass** die Ansteuereinrichtung (36) der ersten der wenigstens zwei Batteriezellen (10, 12, 14, 16, 18, 46, 52) mit einer übergeordneten Steuerungseinrichtung (42) und/oder mit der Ansteuereinrichtung (36) der zweiten der wenigstens zwei Batteriezellen (10, 12, 14, 16, 18, 46, 52) über eine Kommunikationsverbindung zur Steuerung eines aktiven Ladungsausgleichs zwischen der ersten der wenigstens zwei Batteriezellen (10, 12, 14, 16, 18, 46, 52) und der zweiten der wenigstens zwei Batteriezellen (10, 12, 14, 16, 18, 46, 52) gekoppelt ist.

3. Batterie (20, 60) nach Anspruch 2,
**dadurch gekennzeichnet,**
**dass** die übergeordnete Steuerungseinrichtung (42) dazu ausgelegt ist, einen Sollwert für eine zu entnehmende Energie aus der ersten der wenigstens zwei Batteriezellen (10, 12, 14, 16, 18, 46, 52) vorzugeben und an die Ansteuereinrichtung (36) der ersten der wenigstens zwei Batteriezellen (10, 12, 14, 16, 18, 46, 52) über die Kommunikationsverbindung bereitzustellen, und die Ansteuereinrichtung (36) dazu ausgelegt ist, in Abhängigkeit von dem bereitgestellten Sollwert ein elektrisches Wechselfeld in dem Kondensatorelement (C) zu erzeugen.

4. Batterie (20, 60) nach einem der vorhergehenden Ansprüche,
**dadurch gekennzeichnet,**
**dass** die erste elektrisch leitfähige Fläche (22) und die die zweite elektrisch leitfähige Fläche (24) jeweils durch ein Gehäuse (40) der jeweiligen der wenigstens zwei Batteriezellen (10, 12, 14, 16, 18, 46, 52) gebildet ist.

5. Batterie (20, 60) nach einem der vorhergehenden Ansprüche, **dadurch gekennzeichnet,**
**dass** die Batterie (20, 60) wenigstens eine dritte Batteriezelle (10, 12, 14, 16, 18, 46, 52) umfasst, wobei
- die erste Ansteuereinrichtung (36) dazu ausgelegt ist, in der ersten Batteriezelle elektrochemisch gespeicherte Energie zu entnehmen und diese durch Erzeugung eines elektrischen Wechselfeldes in dem Kondensatorelement (C) zu übertragen,
- die elektrische Energie über die zweite der Batteriezellen (10, 12, 14, 16, 18, 46, 52) hinweg durchzuleiten, ohne die Energie elektrochemisch in der zweiten Batteriezelle zwischenzuspeichern, und
- eine dritte Ansteuereinrichtung (36) dazu ausgelegt ist, die durchgeleitete elektrische Energie in die dritte der Batteriezellen (10, 12, 14, 16, 18, 46, 52) einzuspeisen

6. Batterie (20, 60) nach einem der vorhergehenden Ansprüche, **dadurch gekennzeichnet,**
**dass** die Batterie (20, 60) wenigstens zwei Batteriemodule (50) umfasst, wobei die wenigstens zwei Batteriemodule (50) jeweils eine mit einer Modul-Ansteuereinrichtung gekoppelte elektrisch leitfähige Modulfläche aufweisen, welche elektrisch isoliert voneinander angeordnet sind und ein Modul-Kondensatorelement (C_{M}) ausbilden, wobei die Modul-Ansteuereinrichtungen des jeweiligen Batteriemoduls (50) dazu ausgelegt sind, elektrische Energie zwischen den wenigstens zwei Batteriemodulen (50) durch Erzeugung eines elektrischen Wechselfeldes in dem Modul-Kondensatorelement (C_{M}) zu übertragen.

7. Batterie (20, 60) nach Anspruch 6,
**dadurch gekennzeichnet,**
**dass** die Modul-Ansteuereinrichtungen mit der Gesamtheit der jeweils ein Batteriemodul (50) bildenden Batteriezellen (52) gekoppelt sind

8. Batterie (20, 60) nach einem der vorhergehenden Ansprüche, **dadurch gekennzeichnet,**
**dass** die Ansteuereinrichtung (36) durch einen einzigen integrierten Schaltkreis sowie passive Bauelemente ausgebildet ist.

9. Kraftfahrzeug mit einer Batterie (20, 60) nach einem der vorhergehenden Ansprüche.

10. Verfahren zum Betreiben einer Batterie (20, 60) für ein Kraftfahrzeug mit wenigstens zwei benachbart zueinander angeordneten Batteriezellen (10, 12, 14, 16, 18, 46, 52),
**gekennzeichnet durch**
Übertragen elektrischer Energie zwischen einer ersten der wenigstens zwei Batteriezellen (10, 12, 14, 16, 18, 46, 52) und einer zweiten der wenigstens zwei Batteriezellen (10, 12, 14, 16, 18, 46, 52) durch Erzeugen eines elektrischen Wechselfeldes in dem Kondensatorelement (C), wobei eine Begrenzungsfläche (26) einer ersten der wenigstens zwei Batteriezellen (10, 12, 14, 16, 18, 46, 52) eine mit einer ersten Ansteuereinrichtung (36) gekoppelte erste elektrisch leitfähige Fläche (22) und eine Begrenzungsfläche (28) einer zweiten der wenigstens zwei Batteriezellen (10, 12, 14, 16, 18, 46, 52) eine mit einer zweiten Ansteuereinrichtung (36) gekoppelte zweite elektrisch leitfähige Fläche (24) aufweist, wobei die zwei elektrisch leitfähigen Flächen (22, 24) elektrisch isoliert voneinander angeordnet werden und das Kondensatorelement (C) ausbilden.

## Claims

1. Battery (20, 60) for a motor vehicle having at least two battery cells (10, 12, 14, 16, 18, 46, 52) disposed adjacent to one another,
**characterised in**
**that** a boundary surface (26) of a first of the at least two battery cells (10, 12, 14, 16, 18, 46, 52) has a first electrically conductive surface (22) coupled to a first control device (36) and a boundary surface (28) of a second of the at least two battery cells (10, 12, 14, 16, 18, 46, 52) has a second electrically conductive surface (24) coupled to a second control device (36), wherein the two electrically conductive surfaces (22, 24) are electrically insulated from one another and form a capacitor element (C), wherein the control devices (36) are designed to transmit electrical power between the first of the at least two battery cells (10, 12, 14, 16, 18, 46, 52) and the second of the at least two battery cells (10, 12, 14, 16, 18, 46, 52) by generating an electrical alternating field in the capacitor element (C).

2. Battery (20, 60) according to claim 1,
**characterised in**
**that** the control device (36) of the first of the at least two battery cells (10, 12, 14, 16, 18, 46, 52) is connected with a superordinate steering device (42) and/or with the control device (36) of the second of the at least two battery cells (10, 12, 14, 16, 18, 46, 52) via a communication connection in order to control the active charge balance of the first of the at least two battery cells (10, 12, 14, 16, 18, 46, 52) and the second of the at least two battery cells (10, 12, 14, 16, 18, 46, 52).

3. Battery (20, 60) according to claim 2,
**characterised in**
**that** the superordinate steering device (42) is designed to specify a target value for an energy to be extracted from the first of the at least two battery cells (10, 12, 14, 16, 18, 46, 52) and to provide it to the control device (36) of the first of the at least two battery cells (10, 12, 14, 16, 18, 46, 52) via the communication connection, and the control device (36) is designed, depending on the target value provided, to generate an alternating electric field in the capacitor element (C).

4. Battery (20, 60) according to any one of the previous claims,
**characterised in**
**that** the first electrically conductive surface (22) and the second electrically conductive surface (24) is respectively formed by a housing (40) of the respective at least two battery cells (10, 12, 14, 16, 18, 46, 52).

5. Battery (20, 60) according to any one of the previous claims,
**characterised in**
**that** the battery (20, 60) comprises at least a third battery cell (10, 12, 14, 16, 18, 46, 52), wherein
- the first control device (36) is designed to remove energy stored electrochemically in the first battery cell and to transfer this through generation of an alternating electric field in the capacitor element (C),
conducting the electrical energy via the second of the battery cells (10, 12, 14, 16, 18, 46, 52) without making intermediate electrochemical storage of the energy in the second battery cell, and
- a third control device (36) is designed to feed the conducted electrical energy into the third of the battery cells (10, 12, 14, 16, 18, 46, 52)

6. Battery (20, 60) according to any one of the previous claims,
**characterised in**
**that** the battery (20, 60) comprises at least two battery modules (50), wherein the at least two battery modules (50) respectively feature an electrically conductive module surface, respectively connected to a module control device, which are arranged in electrical insulation from each other and form a capacitor module (C_{M}), wherein the module control devices of the respective battery module (50) are designed to transfer electrical energy between the at least two battery modules (50) through the generation of an alternating electric field in the capacitor module (C_{M}).

7. Battery (20, 60) according to claim 6,
**characterised in**
**that** the module control devices are connected with all of the battery cells (52) forming a battery module (50).

8. Battery (20, 60) according to any one of the previous claims,
**characterised in**
**that** the control device (36) is formed by a single integrated circuit and passive components.

9. Motor vehicle with a battery (20, 60) according to any one of the previous claims.

10. Method for operating a battery (20, 60) for a motor vehicle having at least two battery cells (10, 12, 14, 16, 18, 46, 52) disposed adjacent to one another,
**characterised by**
transmission of electrical energy between a first of the at least two battery cells (10, 12, 14, 16, 18, 46, 52) and a second of the at least two battery cells (10, 12, 14, 16, 18, 46, 52) through the generation of an alternating electric field in the capacitor element (C), wherein a boundary surface (26) of a first of the at least two battery cells (10, 12, 14, 16, 18, 46, 52) features a first electrically conductive surface (22) connected with a first control device and a boundary surface (28) of a second of the at least two battery cells (10, 12, 14, 16, 18, 46, 52) features a second electrically conductive surface (24) connected with a second control device (36), wherein the two electrically conductive surfaces (22, 24) are arranged electrically insulated from each other and form the capacitor element (C).

## Revendications

1. Batterie (20, 60) pour un véhicule automobile avec au moins deux éléments de batterie (10, 12, 14, 16, 18, 46, 52) agencés au voisinage les uns des autres,
**caractérisée en ce**
**qu'**une surface de délimitation (26) d'un premier des au moins deux éléments de batterie (10, 12, 14, 16, 18, 46, 52) présente une première surface électriquement conductrice (22) couplée à un premier dispositif de commande (36) et une surface de délimitation (28) d'un deuxième des au moins deux éléments de batterie (10, 12, 14, 16, 18, 46, 52) présente une deuxième surface électriquement conductrice (24) couplée à un deuxième dispositif de commande (36), batterie dans laquelle les deux surfaces électriquement conductrices (22, 24) sont agencées isolées électriquement l'une de l'autre et forment un élément condensateur (C), dans laquelle les dispositifs de commande (36) sont réalisés pour transmettre de l'énergie électrique entre le premier des au moins deux éléments de batterie (10, 12, 14, 16, 18, 46, 52) et le deuxième des au moins deux éléments de batterie (10, 12, 14, 16, 18, 46, 52) par production d'un champ électrique alternatif dans l'élément condensateur (C).

2. Batterie (20, 60) selon la revendication 1,
**caractérisée en ce**
**que** le dispositif de commande (36) du premier des au moins deux éléments de batterie (10, 12, 14, 16, 18, 46, 52) est couplé à un dispositif de commande supérieur (42) et/ou au dispositif de commande (36) du deuxième des au moins deux éléments de batterie (10, 12, 14, 16, 18, 46, 52) par l'intermédiaire d'une liaison de communication en vue de la commande d'un équilibrage de charge actif entre le premier des au moins deux éléments de batterie (10, 12, 14, 16, 18, 46, 52) et le deuxième des au moins deux éléments de batterie (10, 12, 14, 16, 18, 46, 52).

3. Batterie (20, 60) selon la revendication 2,
**caractérisée en ce**
**que** le dispositif de commande supérieur (42) est réalisé pour prescrire une valeur de consigne pour une énergie à prélever à partir du premier des au moins deux éléments de batterie (10, 12, 14, 16, 18, 46, 52) et pour la fournir au dispositif de commande (36) du premier des au moins deux éléments de batterie (10, 12, 14, 16, 18, 46, 52) par l'intermédiaire de la liaison de communication et le dispositif de commande (36) est réalisé pour produire en fonction de la valeur de consigne fournie un champ électrique alternatif dans l'élément condensateur (C).

4. Batterie (20, 60) selon l'une quelconque des revendications précédentes, **caractérisée en ce**
**que** la première surface électriquement conductrice (22) et la deuxième surface électriquement conductrice (24) sont formées à chaque fois par un boîtier (40) de la cellule de batterie respective des au moins deux éléments de batterie (10, 12, 14, 16, 18, 46, 52)

5. Batterie (20, 60) selon l'une quelconque des revendications précédentes, **caractérisée en ce**
**que** la batterie (20, 60) comprend au moins une troisième cellule de batterie (10, 12, 14, 16, 18, 46, 52), batterie dans laquelle
- le premier dispositif de commande (36) est réalisé pour prélever de l'énergie stockée de manière électrochimique dans la première cellule de batterie et pour transmettre celle-ci par production d'un champ électrique alternatif dans l'élément condensateur (C),
- conduire l'énergie électrique au-delà du deuxième des éléments de batterie (10, 12, 14, 16, 18, 46, 52) sans stocker temporairement l'énergie de façon électrochimique dans la deuxième cellule de batterie, et
- un troisième dispositif de commande (36) est réalisé pour introduire l'énergie électrique conduite dans le troisième des éléments de batterie (10, 12, 14, 16, 18, 46, 52).

6. Batterie (20, 60) selon l'une quelconque des revendications précédentes, **caractérisée en ce**
**que** la batterie (20, 60) comprend au moins deux modules de batterie (50), batterie dans laquelle les au moins deux modules de batterie (50) comportent chacun une surface de module électriquement conductrice qui est couplée à un dispositif de commande de module, lesquelles surfaces de module sont agencées isolées électriquement les unes des autres et forment un élément condensateur de module (C_{M}), dans laquelle les dispositifs de commande de module du module de batterie respectif (50) sont réalisés pour transmettre de l'énergie électrique entre les au moins deux modules de batterie (50) par production d'un champ électrique alternatif dans l'élément condensateur de module (C_{M}).

7. Batterie (20, 60) selon la revendication 6,
**caractérisée en ce**
**que** les dispositifs de commande de module sont couplés à la totalité des éléments de batterie (52) formant à chaque fois un module de batterie (50).

8. Batterie (20, 60) selon l'une quelconque des revendications précédentes, **caractérisée en ce**
**que** le dispositif de commande (36) est réalisé par un seul circuit intégré ainsi que par des composants passifs.

9. Véhicule automobile avec une batterie (20, 60) selon l'une quelconque des revendications précédentes.

10. Procédé de fonctionnement d'une batterie (20, 60) pour un véhicule automobile avec au moins deux éléments de batterie (10, 12, 14, 16, 18, 46, 52) agencés au voisinage les uns des autres,
**caractérisé par**
la transmission d'énergie électrique entre un premier des au moins deux éléments de batterie (10, 12, 14, 16, 18, 46, 52) et un deuxième des au moins deux éléments de batterie (10, 12, 14, 16, 18, 46, 52) par production d'un champ électrique alternatif dans l'élément condensateur (C), procédé dans lequel une surface de délimitation (26) d'un premier des au moins deux éléments de batterie (10, 12, 14, 16, 18, 46, 52) présente une première surface électriquement conductrice (22) couplée à un premier dispositif de commande (36) et une surface de délimitation (28) d'un deuxième des au moins deux éléments de batterie (10, 12, 14, 16, 18, 46, 52) présente une deuxième surface électriquement conductrice (24) couplée à un deuxième dispositif de commande (36), dans lequel les deux surfaces électriquement conductrices (22, 24) sont agencées isolées électriquement l'une de l'autre et forment l'élément condensateur (C).
